# EUROPEAN PATENT APPLICATION

(11) **EP 1 895 529 A1**
(43) Date of publication of application: **05.03.2008**
(21) Application number: 07016353.0
(22) Date of filing: 21.08.2007
(51) Int. Cl.: G11B 7/135, G11B 7/09, G11B 7/095, G11B 7/22

(54) **Aberration correction element, optical pickup and optical disc apparatus**

(30) Priority: 24.08.2006 JP 2006227891
(71) Applicant: Funai Electric Co., Ltd., Daito-shi Osaka 574-0013 (JP)
(72) Inventor: Miyatake, Kenshou, Daito-shi, Osaka 574-0013 (JP)
(74) Representative: Beetz & Partner

(57) **Abstract**

An aberration correction element (24) includes a support substrate (30), a plurality of piezoelectric elements (33) disposed on the support substrate, each of which is made up of a piezoelectric member (31) and electrodes (32a,32b) disposed at the upper and the lower sides of the piezoelectric member, and reflection portion (35) disposed at the upper portion of the plurality of piezoelectric elements so as to reflect incident light. The reflection portion is a set of rectangular mirror segments (34) of the same number as the number of the piezoelectric elements. The individual mirror segments are independent of each other and are bonded to upper sides of the individual piezoelectric elements, respectively.

## Description

### BACKGROUND OF THE INVENTION

### Field of the Invention

The present invention relates to an aberration correction element that is disposed in an optical system of an optical pickup or the like so as to correct aberration, in particular to an aberration correction element that utilizes a piezoelectric element for correcting aberration. In addition, the present invention relates to an optical pickup and an optical disc apparatus that are capable of correcting wave aberration by using the aberration correction element.

### Description of Related Art

Conventionally, it is known that wave aberration occurs in an optical pickup of an optical disc apparatus due to various factors when an optical disc such as a compact disc (CD), a digital versatile disc (DVD) or the like is read by an optical disc apparatus.

As types of such wave aberration, there are astigmatism due to the optical system caused from insufficient accuracy of an optical element of the optical pickup, assembly error or the like, coma aberration caused from inclination of the optical disc with respect to an optical axis, spherical aberration caused from a difference of thickness of a transparent cover layer that protects a recording layer of the optical disc. It is understood that the wave aberration can cause deterioration of reproduction quality or the like of the optical disc apparatus, so there are various measures taken for correcting wave aberration conventionally.

For example, as to the astigmatism due to the optical system, adjustment of attaching optical elements disposed in the optical pickup or selection of adhesive are performed appropriately so as to manage a direction and a level of the astigmatism.

In addition, there is proposed a technique for correcting wave aberration such as coma aberration, spherical aberration or the like, as shown in JP-A-2002-258211 or JP-A-H05-333274, in which a mirror surface of a reflection mirror disposed in the optical system is deformed continuously by using a piezoelectric element to control a phase of light reflected by the reflection mirror, so that influence of the wave aberration can be corrected.

However, the method of managing a direction and a level of the astigmatism as described above has a problem that the adjustment of attaching optical elements takes long time so that work load increases. It also has another problem that a type of adhesive that is used for fixing optical elements is limited, so there is little flexibility in fixing components.

Furthermore, in the case where wave aberration is corrected by utilizing the structure disclosed in JP-A-2002-258211 or JP-A-H05-333274, it is necessary to adjust drive voltages to be applied to the piezoelectric elements so that the entire surface of the single mirror has a desired shape. Therefore, it is not easy to adjust the drive voltages to be applied to the piezoelectric elements. In addition, it is necessary to deform the entire mirror for correcting wave aberration in the case of the structure disclosed in JP-A-2002-258211 or JP-A-H05-3332742. Therefore, a part that does not need to be deformed originally for correction of wave aberration is also deformed, so the piezoelectric element has to generate a large force resulting in large power consumption.

### SUMMARY OF THE INVENTION

An object of the present invention is to provide an aberration correction element that can be adjusted easily when it corrects wave aberration and does not consume electric power unnecessarily. Another object of the present invention is to provide an optical pickup and an optical disc apparatus equipped with the aberration correction element, which can reduce a work load of assembling its optical system and can correct influence of wave aberration appropriately.

An aberration correction element of the present invention includes a support substrate, a plurality of piezoelectric elements disposed on the support substrate, each of which is made up of a piezoelectric member and electrodes for applying voltage to the piezoelectric member, and a reflection portion disposed on the surface of the piezoelectric element opposite to the surface that faces the support substrate, the reflection portion reflecting incident light, so that a phase of the incident light is modulated when it is reflected. The reflection portion is a set of mirror segments of the same number as the number of the piezoelectric elements, and each of the mirror segments is bonded to each of the piezoelectric elements.

According to this structure, since a mirror segment is bonded to each of the plurality of piezoelectric elements arranged on the support substrate, the height of a reflecting surface of each of the mirror segments can be adjusted freely by adjusting applied voltage to be applied to each of the piezoelectric elements. Therefore, a phase of a light beam that enters the aberration correction element and is reflected by the same can be modulated appropriately by adjusting voltage to be applied to each of the piezoelectric elements. Therefore, it is able to provide an aberration correction element that can be adjusted easily when wave aberration is corrected. In addition, since the height of each of the mirror segments is adjusted so that wave aberration is corrected, it is sufficient to drive only necessary mirror segments so that unnecessary power consumption can be suppressed.

As to another aspect of the present, in the aberration correction element invention having the structure described above, the mirror segments have reflecting surfaces of the same height when no voltage is applied to any of the piezoelectric elements, and the mirror segments are arranged so that there is no gap between neighboring reflecting surfaces.

According to this structure, since the reflecting surfaces of the mirror segments have the same height when no voltage is applied to any piezoelectric element, it is not necessary to apply voltage to piezoelectric elements of a part that is not required to correct wave aberration so that unnecessary power consumption can be suppressed. In addition, since the reflecting surfaces of the mirror segments have the same heights in the state where voltage is not applied to the piezoelectric elements, voltage to be applied to the piezoelectric element can be adjusted easily. Furthermore, since there is no gap between reflecting surfaces of the mirror segments in the state where voltage is not applied to the piezoelectric elements, generation of stray light in the aberration correction element can be suppressed.

In addition, an optical pickup of the present invention includes a light source, an objective lens that condenses a light beam emitted from the light source on a recording surface of an optical recording medium, and an aberration correction element having the structure described above that is disposed between the light source and the objective lens.

According to this structure, wave aberration that may occur in the optical pickup can be corrected appropriately by the aberration correction element. Moreover, since the astigmatism that may occur in adjustment when the optical system is assembled can be adjusted after the assembling by using the aberration correction element, the optical pickup can be assembled without concern for the adjustment when the optical element is attached or selection of adhesive. Therefore, work load when the optical pickup (optical system) is assembled can be reduced.

In addition, an optical disc apparatus of the present invention includes an optical pickup having the structure described above, and an aberration correction element control portion that controls the aberration correction element.

According to this structure, the optical disc apparatus can correct wave aberration that may occur in the optical pickup appropriately by the aberration correction element so that deterioration of quality in reproducing an optical recording medium can be suppressed. Furthermore, the optical disc apparatus having this structure can reduce a work load when it is assembled.

### BRIEF DESCRIPTION OF THE DRAWINGS

Fig. 1 is a block diagram showing a structure of an optical disc apparatus according to the present embodiment.
Fig. 2 is a schematic diagram showing an optical system of an optical pickup provided to the optical disc apparatus of the present embodiment.
Fig. 3A is a schematic cross section showing a structure of an aberration correction element of the present embodiment, which shows a state where no voltage is applied to any of a plurality of piezoelectric elements provided to the aberration correction element.
Fig. 3B is a schematic cross section showing the structure of the aberration correction element of the present embodiment, which shows a state where a voltage is applied to a part of the plurality of piezoelectric elements provided to the aberration correction element.
Fig. 4 is a schematic plan view of the aberration correction element provided to the optical disc apparatus of the present embodiment, viewed from a reflection portion side.

### DETAILED DESCRIPTION OF THE PREFERRED EMBODIMENTS

Hereinafter, an embodiment of the present invention will be described with reference to the attached drawings. However, the embodiment described here is merely an example, and the present invention is not limited to the embodiment described here.

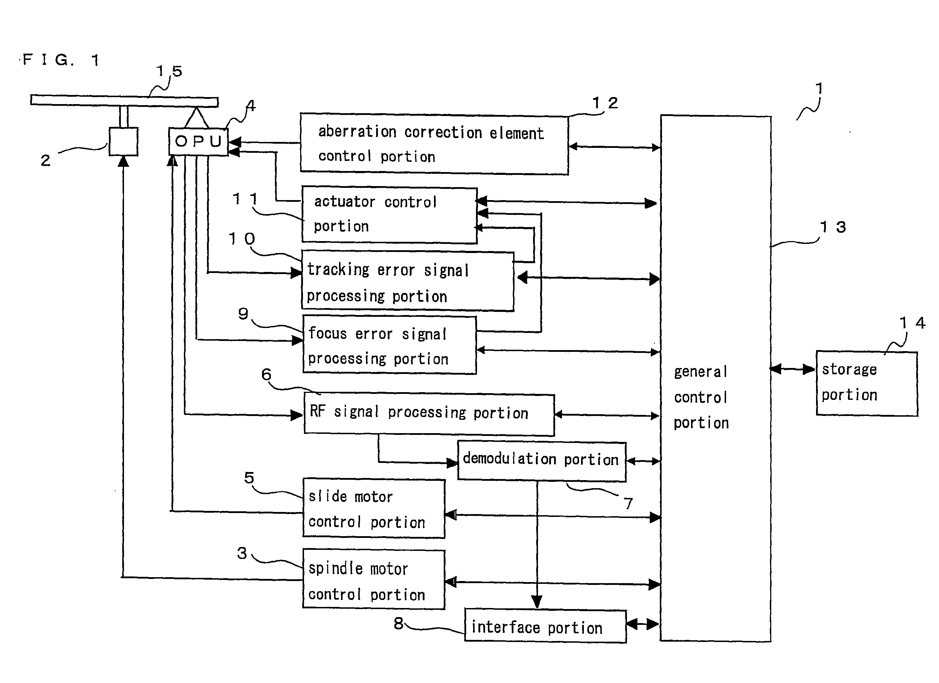

Fig. 1 is a block diagram showing a structure of an optical disc apparatus according to the present embodiment. The optical disc apparatus 1 is provided for enabling reproduction of information recorded on an optical recording medium (optical disc) 15 and recording information on the optical disc 15.

Numeral 2 is a spindle motor, and the optical disc 15 is retained detachably by a chucking portion (not shown) that is disposed at the upper portion of the spindle motor 2. When information is recorded or reproduced on the optical disc 15, the spindle motor 2 drives the optical disc 15 to rotate continuously. Rotation control of the spindle motor 2 is performed by a spindle motor control portion 3.

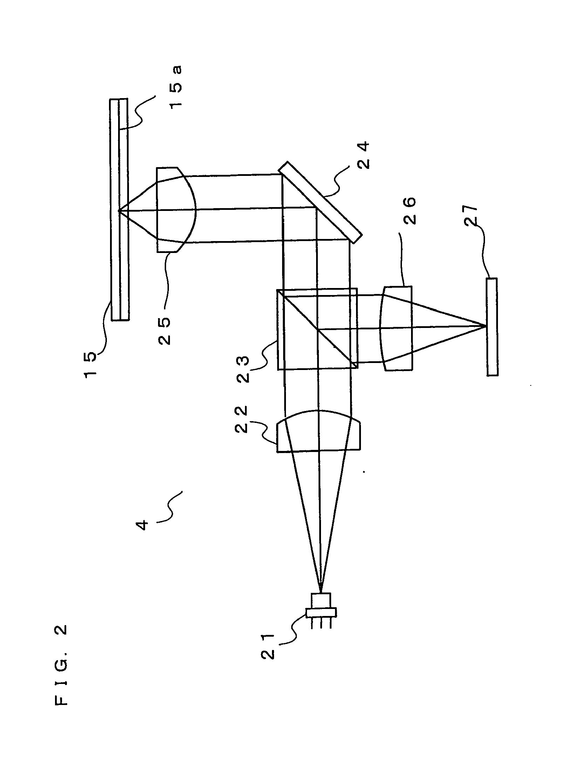

Numeral 4 is an optical pickup, which projects a laser beam emitted from a light source onto the optical disc 15 so that information can be recorded on the optical disc 15 and that information recorded on the optical disc 15 can be reproduced. Fig. 2 is a schematic diagram showing an optical system of the optical pickup 4. As shown in Fig. 2, the optical pickup 4 includes a light source 21, a collimator lens 22, a beam splitter 23, an aberration correction element 24 having a function as an upstand mirror and an aberration correction function of correcting astigmatism, an objective lens 25, a condenser lens 26 and a photodetector 27.

Note that the structure of the optical system of the optical pickup is not limited to the structure described above but can be modified variously. For example, although the single light source 21 is disposed in the present embodiment, it is possible to adopt another structure in which a plurality of light sources are disposed if the optical disc apparatus 1 supports reading and writing on a plurality of types of optical discs, and a color combining prism or the like is disposed for making laser beams emitted from the light sources have the same optical axis.

The light source 21 is a laser diode (LD) that emits a laser beam of a specific wavelength depending on a type of the optical disc 15 on which the optical disc apparatus 1 record or reproduce information. For example, if a CD is a target disk of the optical disc apparatus 1, an LD emitting a laser beam having a wavelength of 780 nm band is used. If a DVD is a target disk of the optical disc apparatus 1, an LD emitting a laser beam having a wavelength of 650 nm band is used.

A laser beam emitted from the light source 21 in the optical pickup 4 is converted into parallel rays by the collimator lens 22, passes through the beam splitter 23, and is reflected by the aberration correction element 24 having the function as the upstand mirror in the direction toward the optical disc 15. After that, the laser beam is condensed by the objective lens 25 onto a recording surface 15a of the optical disc 15 on which information is recorded. Reflection light that is reflected by the recording surface 15a passes through the objective lens 25 and the aberration correction element 24 in this order, and is reflected by the beam splitter 23 so as to be condensed by the condenser lens 26 onto a light receiving portion of the photodetector 27. The photodetector 27 converts light information of the received light beam into an electric signal.

With reference to Fig. 1 again, a slide motor control portion 5 controls to drive a slide motor (not shown) that is disposed so that the optical pickup 4 can move. Thus, movement of the optical pickup 4 in a radial direction is controlled.

An RF signal processing portion 6 processes an RF signal obtained by the photodetector 27 of the optical pickup 4 (see Fig. 2), and the processed signal is supplied to a demodulating portion 7.

The demodulating portion 7 performs demodulation of data and detects an error in the data. If an error is detected in the data and can be corrected, the demodulating portion 7 performs a correction process of the data and supplies the reproduced data to an interface portion 8. Note that if a reproduction error that cannot be corrected occurs, rereading (retry) of the data is performed by a known method.

The interface portion 8 delivers reproduced data supplied from the demodulating portion 7 to external equipment such as a personal computer (not shown).

A focus error signal processing portion 9 generates a focus error signal by using a signal that is detected by the photodetector 27 of the optical pickup 4. The focus error signal is generated by a known method, so description thereof will be omitted. The focus error signal generated by the focus error signal processing portion 9 can be supplied to an actuator control portion 11 that will be described later in detail.

A tracking error signal processing portion 10 generates a tracking error signal by using the signal detected by the photodetector 27 of the optical pickup 4. The tracking error signal is generated by a known method, so description thereof will be omitted. The tracking error signal generated by the tracking error signal processing portion 10 can be supplied to the actuator control portion 11.

The actuator control portion 11 supplies a drive signal to an actuator (not shown) on which the objective lens 25 (see Fig. 2) is mounted, based on the signals from the focus error signal processing portion 9 and the tracking error signal processing portion 10. The actuator that is supplied with the drive signal drives individual portions to work based on the signal. It performs focus control of moving the objective lens 25 in a focus direction that is parallel with the optical axis direction so as to adjust the focus, and tracking control of moving the objective lens 25 in the direction that is parallel with the radial direction of the optical disc 15 so as to adjust a spot position of the laser beam on a track formed on the optical disc 15.

An aberration correction element control portion 12, which is connected electrically to the aberration correction element 24 that corrects astigmatism, controls the aberration correction element 24.

Furthermore, the general control portion 13 controls the spindle motor control portion 3, the slide motor control portion 5, the RF signal processing portion 6, the demodulating portion 7, the interface portion 8, the focus error signal processing portion 9, the tracking error signal processing portion 10, the actuator control portion 11, the aberration correction element control portion 12, a storage portion 14 that stores information necessary for control, and the like, so as to control the entire apparatus.

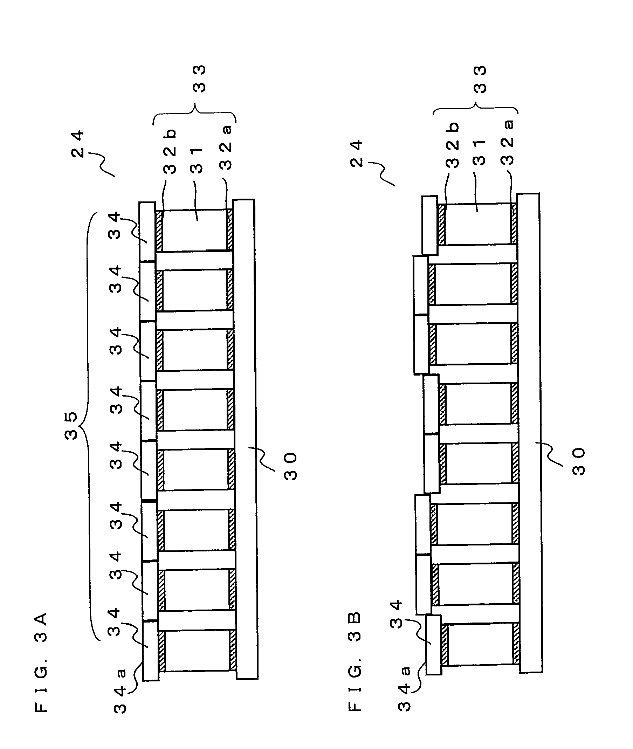

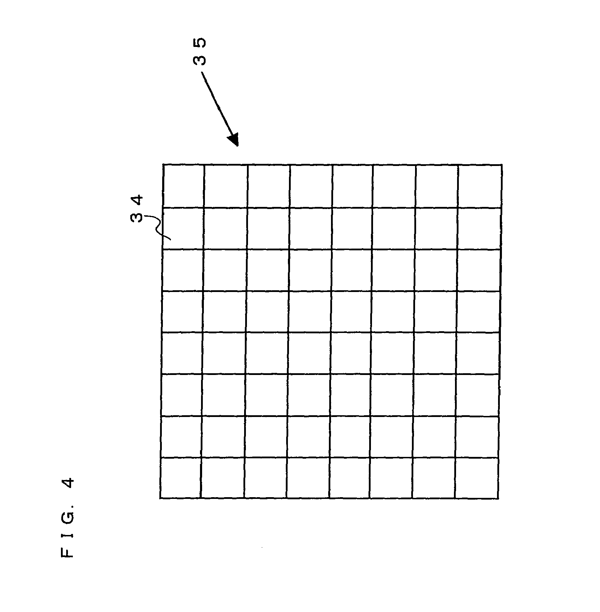

Next, detail of the aberration correction element 24 having two functions including the function as the upstand mirror and the function of correcting astigmatism due to the optical system will be described with reference to Figs. 3A, 3B and 4. Fig. 3A is a schematic cross section showing a structure of an aberration correction element 24 of the present embodiment, which shows a state where no voltage is applied to any of a plurality of piezoelectric elements 33 provided to the aberration correction element 24. Fig. 3B is a schematic cross section showing the structure of the aberration correction element 24 of the present embodiment, which shows a state where a voltage is applied to a part of the plurality of piezoelectric elements 33 provided to the aberration correction element 24. Furthermore, Fig. 4 is a schematic plan view of the aberration correction element 24 provided to the optical disc apparatus of the present embodiment, viewed from a reflection portion 35 side.

The aberration correction element 24 includes a support substrate 30 made of an insulating material such as glass or ceramics, a plurality of piezoelectric elements 33 disposed on the support substrate 30, each of which is made up of a piezoelectric member 31 and metal electrodes 32a and 32b made of aluminum or the like disposed on the upper and the lower sides of the piezoelectric member 31, and reflection portions 35 disposed on the upper sides of the plurality of piezoelectric element 33 so as to reflect incident light.

Furthermore, although lead zirconate titanate (Pb(ZrₓTi₁₋ₓ)O₃) is used as the piezoelectric member 31 of the piezoelectric element 33 in the present embodiment, the present invention is not limited to this structure. It is possible to adopt another structure in which other piezoelectric ceramics such as barium titanate (BaTiO₃) or a piezoelectric polymeric material such as polyvinylidene fluoride is used.

The reflection portion 35 is a set of rectangular mirror segment 34 of the same number as the number of the piezoelectric elements 33. The mirror segments 34 are independent of each other and are bonded on the upper sides of the different piezoelectric elements 33, respectively. Note that the mirror segment 34 is formed by vapor deposition or the like of reflection film such as aluminum (Al) or the like on silicon or the like, for example.

The piezoelectric elements 33 on which the mirror segments 34 are bonded have the same height. Therefore, if no voltage is applied to any of the piezoelectric elements 33, reflecting surfaces 34a of the mirror segments 34 that are bonded to the upper sides of the piezoelectric elements 33 have the same height to that all the mirror segments 34 constitute a single flat plane.

In addition, the piezoelectric elements 33 to which the mirror segments 34 are bonded are arranged in a matrix on the support substrate 30 (8 x 8 = 64 of piezoelectric elements 33 are arranged in the present embodiment). The aberration correction element 24 is structured so that there is no gap between the mirror segments 34 in the state where the reflecting surfaces 34a of the mirror segments 34 have the same height (in the state where no voltage is applied to any of the piezoelectric elements 33 in the present embodiment). This structure is preferable because it can prevent generation of stray light as to the laser beam entering the aberration correction element 24.

Each of the metal electrodes 32a and 32b of each of the piezoelectric elements 33 is connected electrically to the aberration correction control portion 12 (aberration correction element driving circuit) via a wiring lead (not shown), so that each of the piezoelectric elements 33 can be controlled independently. In the present embodiment, wiring leads from the metal electrodes 32a that are disposed at the lower sides of the piezoelectric members 31 among wiring leads from the piezoelectric elements 33 are put together into a single wire lead, which is connected to the aberration correction element driving circuit. Thus, the number of wiring leads that are connected to the aberration correction element driving circuit 12 can be reduced.

Next, a function of the aberration correction element 24 having the structure described above will be described. Since the aberration correction element 24 has the plurality (64 in the present embodiment) of mirror segments 34 that are arranged without gaps between them, it can be used as a reflecting mirror that reflects totally the laser beam entering the aberration correction element 24. Therefore, it is used as the upstand mirror that changes the direction of the laser beam emitted in the horizontal direction to the vertical direction in the optical disc apparatus 1 of the present embodiment.

In addition, the individual mirror segments 34 of the aberration correction element 25 are respectively bonded to the piezoelectric elements 33 to which individual voltages are applied and controlled independently. Therefore, applied voltages that are applied to the individual piezoelectric elements 33 are adjusted for controlling expansion or contraction quantity of the piezoelectric element 33, so that heights of the reflecting surfaces 34a can be changed individually. Fig. 3B shows a case where heights of the mirror segment 34 are changed, in which a voltage is applied to the second, the third, the sixth and the seventh piezoelectric elements 33 from the left so that they are expanded, while no voltage is applied to other piezoelectric elements 33 so that they are not expanded.

In this way, if the height of the reflecting surface 34a of each of the mirror segments 34 is adjustment appropriately, a phase of the laser beam entering the aberration correction element 24 is modulated in accordance with the height of each of the reflecting surfaces 34a when the laser beam is reflected. Therefore, for example, astigmatism that is caused by adjustment when the optical pickup 4 is assembled is measured in advance by using an interferometer or the like when the optical pickup 4 is assembled. Then, the applied voltages to be applied to the piezoelectric elements 33 for correcting the astigmatism are determined and stored in a storage portion 14 (a memory) in advance. When the optical disc apparatus 1 reads or writes information on the optical disc 15, the aberration correction element control portion 12 applies the applied voltages stored in advance to the piezoelectric elements 33 so that the astigmatism can be corrected.

Although values of the applied voltages to be applied to the piezoelectric elements 33 of the aberration correction element 25 are determined in advance and are stored in the memory 14 in the structure described above, the present invention is not limited to this structure. For example, it is possible to adopt another structure in which a plurality of patterns of the applied voltages to be applied to the piezoelectric elements 33 are prepared and stored in the memory 14 in advance, and before starting to read or write information on the optical disc 15 it is decided which one of the plurality of patterns produces the best level of the reproduced signal (RF signal).
Thus, the applied voltage that is decided to produce of the best level of the reproduced signal is determined to be applied to the piezoelectric element.

Since the aberration correction element 24 works as described above, astigmatism can be corrected even if the direction and the level of the astigmatism is not managed when the optical elements of the optical pickup 4 are attached and adjusted. Therefore, adjustment work when the optical pickup 4 is assembled becomes easy. In addition, since adhesive can be selected freely, flexibility in fixing components increases. Furthermore, astigmatism can be corrected so that a reproduced signal level becomes an optimal state while the optical disc apparatus 1 is reading the optical disc 15.

Although the embodiment described above shows the structure in which the individual mirror segments 34 have the same height in the state where no voltage is applied to any of the piezoelectric elements 33, the present invention is not always limited to this structure. In other words, it is possible to adopt another structure in which the individual mirror segments have different height in the state where no voltage is applied to any of the piezoelectric elements 33. In this case too, astigmatism can be corrected by adjusting voltages to be applied to the piezoelectric elements 33.

In addition, although the embodiment described above shows the structure in which the mirror segment 34 has a rectangular shape, the present invention is not always limited to this structure. For example, it is possible to adopt another structure in which the mirror segment 34 has other polygonal shape such as a hexagonal shape.

Further, although the embodiment described above shows the structure in which the aberration correction element 24 corrects astigmatism, the aberration correction element of the present invention can be used for collecting other wave aberration such as spherical aberration or coma aberration without limiting to astigmatism, because it has a structure of controlling the individual piezoelectric elements independently to adjust the individual mirror segments, so that a phase of incident light can be modulated.

Furthermore, the aberration correction element of the present invention can be applied to an optical apparatus having an optical system that needs correction of aberration without limiting to the optical pickup device. For example, it can be applied to a video projector, a digital camera and the like.

According to the aberration correction element of the present invention, wave aberration such as astigmatism, spherical aberration or coma aberration that may occur in an optical system can be corrected easily. Therefore, it is useful for optical apparatuses such as optical disc apparatus.

## Claims

1. An aberration correction element comprising:
a support substrate;
a plurality of piezoelectric elements disposed on the support substrate, each of which is made up of a piezoelectric member and electrodes for applying voltage to the piezoelectric member; and
a reflection portion disposed on the surface of the piezoelectric element opposite to the surface that faces the support substrate, the reflection portion reflecting incident light, **characterized in that**
the reflection portion is a set of mirror segments of the same number as the number of the piezoelectric elements, and each of the mirror segments is bonded to each of the piezoelectric elements.

2. The aberration correction element according to claim 1, **characterized in that**
the mirror segments have reflecting surfaces of the same height when no voltage is applied to any of the piezoelectric elements, and the mirror segments are arranged so that there is no gap between neighboring reflecting surfaces.

3. An optical pickup comprising:
an aberration correction element according to claim 1 or 2;
a light source;
an objective lens that condenses a light beam emitted from the light source on a recording surface of an optical recording medium, **characterized in that**
the aberration correction element is disposed between the light source and the objective lens.

4. An optical disc apparatus comprising:
an optical pickup according to claim 3; and
an aberration correction element control portion that controls the aberration correction element of the optical pickup.
